# EUROPEAN PATENT SPECIFICATION

(11) **EP 4 401 541 B1**
(45) Date of publication and mention of the grant of the patent: **28.10.2026**
(21) Application number: 22735653.2
(22) Date of filing: 02.06.2022
(51) Int. Cl.: A01D 34/00

(54) **IMPROVED SHEDULING FOR A ROBOTIC LAWNMOWER**
VERBESSERTE FACHBILDUNG FÜR EINEN ROBOTISCHEN RASENMÄHER
PLANIFICATION AMÉLIORÉE POUR UNE TONDEUSE À GAZON ROBOTISÉE

(30) Priority: 14.09.2021 SE 2151129
(43) Date of publication of application: 24.07.2024
(73) Proprietor: Husqvarna AB, 561 82 Huskvarna (SE)
(72) Inventor: ROOS, Lars, 523 40 Ulricehamn (SE); HOLGERSSON, Jonas, 561 40 HUSKVARNA (SE); THÖRN, Christer, 554 66 JÖNKÖPING (SE)
(86) International application number: PCT/SE2022/050540
(87) International publication number: WO 2023/043351

(56) References cited:
- EP-B1- 2 767 150
- WO-A1-2020/148168
- CN-A- 112 868 360
- US-A1- 2017 280 623
- US-B2- 10 034 421
- US-B2- 10 888 046

## Description

### TECHNICAL FIELD

This application relates to robotic lawnmowers and in particular to a system and a method for providing an improved scheduling for a robotic lawnmower.

### BACKGROUND

Automated or robotic lawnmowers are becoming increasingly more popular. In a typical deployment a work area, such as a garden, the robotic lawnmower is commonly scheduled to operate at certain times and for certain lengths of time. The scheduling helps avoid the owners from being disturbed by the robotic lawnmower during operation while providing for a reasonably well-kept lawn.

Weed is an old and well-known nuisance to a garden making it more difficult to keep a well-kept grass lawn. Commonly weed problems are overcome by cutting out the weed (i.e. a more aggressive cutting of the grass) or through application of various chemicals.

The patent published as EP2767150B1 discloses a robotic work tool system, comprising a charging station, a boundary wire, a signal generator for generating and transmitting a signal through said boundary wire for demarcating a work area and a robotic work tool, said robotic work tool comprising a cutting blade and a motor for driving the cutting blade, the robotic work tool being configured to determine a cutting load being exerted on the cutting blade indicating a height of grass in the work area and adapt a work schedule according to said cutting load prior to a next work session, wherein said work schedule includes a cutting height and/or a cutting time.

However, as the inventors have realized after insightful reasoning and inventive thinking realizing an unknown problem, namely that when combatting weeds by simply cutting more aggressively, the weed adapts and instead spreads through the lawn. The inventors have realized that the weed learns to not grow up, but to grow sideways.

Thus, there is a need for an improved manner of handling weeds.

### SUMMARY

The invention provides a robotic lawnmower according to claim 1 and a method for use in a robotic lawnmower according to claim 8. Preferred embodiments are provided in the dependent claims. The scope of the invention is defined by the claims.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic lawnmower being a robotic lawnmower according to an example embodiment of the teachings herein;
Figure 2 shows an example of a robotic lawnmower system being a robotic lawnmower system according to an example embodiment of the teachings herein;
Figure 3 shows a corresponding flowchart for a method according to an example embodiment of the teachings herein; and
Figure 4 shows a schematic view of a cutting scheme for a robotic lawnmower according to an example embodiment of the teachings to remedy lawn weed problems.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein.

Like reference numbers refer to like elements throughout.

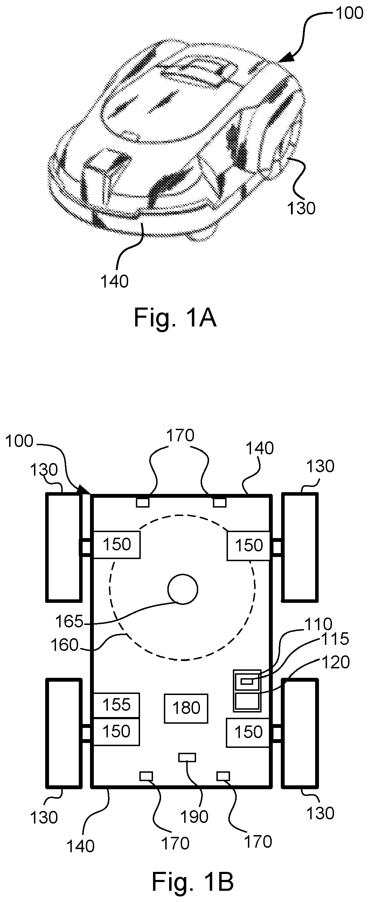

Figure 1A shows a perspective view of a robotic lawnmower 100, here exemplified by a robotic lawnmower 100, having a body 140 and a plurality of wheels 130 (only one side is shown).

Figure 1B shows a schematic overview of the robotic lawnmower 100, also exemplified here by a robotic lawnmower 100. In this example embodiment the robotic lawnmower 100 has a main body part 140 substantially housing all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor.

The robotic lawnmower 100 also comprises a grass cutting device 160, such as a rotating blade 160 driven by a cutter motor 165. In some embodiments the grass cutting device 160 is arranged to enable adaption of the cutting height, the cutting speed and/or the cutting angle. The robotic lawnmower 100 also has (at least) one battery 155 for providing power to the motor(s) 150 and/or the cutter motor 165.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further be arranged with a wireless communication interface 115 for communicating with other devices, such as a server, a personal computer or smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few.

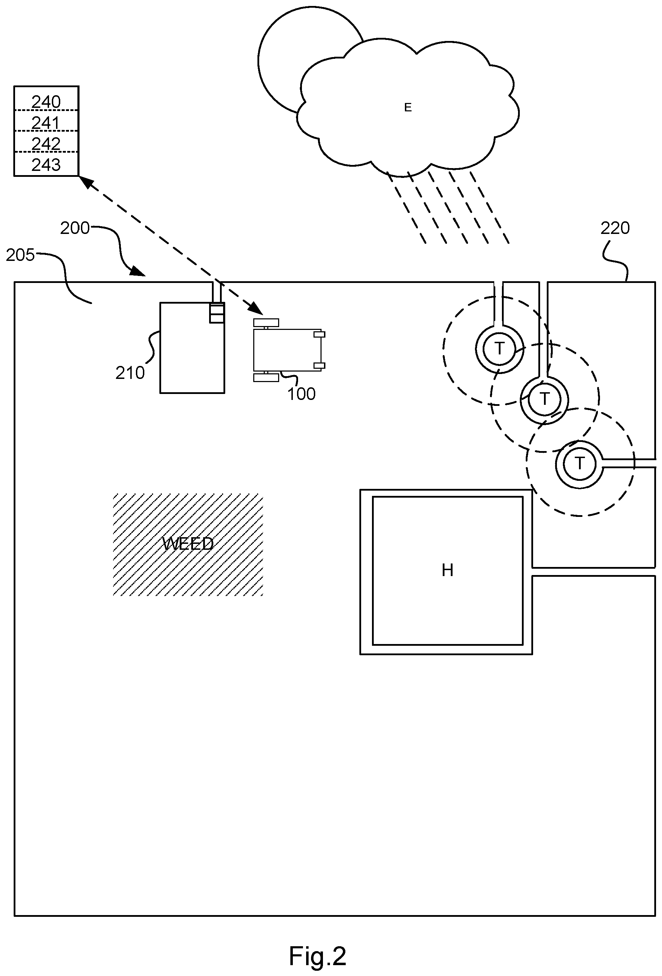

For enabling the robotic lawnmower 100 to navigate with reference to a boundary wire emitting a magnetic field caused by a control signal transmitted through the boundary wire, the robotic lawnmower 100 is further configured to have at least one magnetic field sensor 170 arranged to detect the magnetic field (not shown) and for detecting the boundary wire and/or for receiving (and possibly also sending) information to/from a signal generator (will be discussed with reference to figure 2).

In one embodiment, the robotic lawnmower 100 may further comprise at least one navigation sensor, such as a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device.

In embodiments, where the robotic lawnmower 100 is arranged with a navigation sensor, the magnetic sensors 170 are optional.

The robotic lawnmower 100 also comprises environmental sensors 180. Such sensors 180 may be arranged to detect grass height and/or the presence of weed and I such cases possibly also the height of the weed. Examples of such sensors are based on image recognition (i.e a camera in connection with processing power).

Figure 2 shows a schematic view of a robotic lawnmower system 200 in one embodiment. The schematic view is not to scale. The robotic lawnmower system 200 comprises a robotic lawnmower 100. As noted above the robotic lawnmower is but one example of a robotic lawnmower. The robotic lawnmower system may comprise a combination of robotic lawnmowers, one being a robotic lawnmower, but the teachings herein may also be applied to other robotic lawnmowers adapted to operate within a work area 205.

The robotic lawnmower system 200 may also comprise charging station 210 which in some embodiments is arranged with a signal generator and a boundary wire 220. The signal generator is arranged to generate a control signal to be transmitted through the boundary wire 220. In such embodiments the work area is bounded by the boundary wire 220.

In some embodiments, where the robotic lawnmower 100 is configured to operate according to a satellite navigation sensor 190, the work area 205 is bounded by a virtual boundary. In such embodiments, a map of the work area 205 may be stored in the memory 120 of the robotic lawnmower 100.

The work area 205 is in this application exemplified as a garden but can also be other work areas as would be understood. The garden contains a number of obstacles (O), exemplified herein by a number (3) of trees (T) and a house structure (H). The trees are marked both with respect to their trunks (filled lines) and the extension of their foliage (dashed lines).

A server 240 may also be part of the robotic lawnmower system 200 or at least be arranged to be connected to the robotic lawnmower 100 through the communication interface 115. The server may be a cloud server or a service server. Alternatively, or additionally the server may be part of a personal computer or smartphone. The server comprises or is connected to a controller 241 for controlling the operating of the server, a memory for storing instructions and data related to the robotic lawnmower, and a communication interface for communicating with the robotic lawnmower 100, but also with other servers/services. The server 240 is thus available to provide information on for example weather as discussed in the above.

The robotic lawnmower 100 is in some embodiments configured to determine the environmental factors and the usage factors possibly utilizing the sensors 180 and/or the server 240. Such factors may include but not be limited to sun light and/or moisture levels.

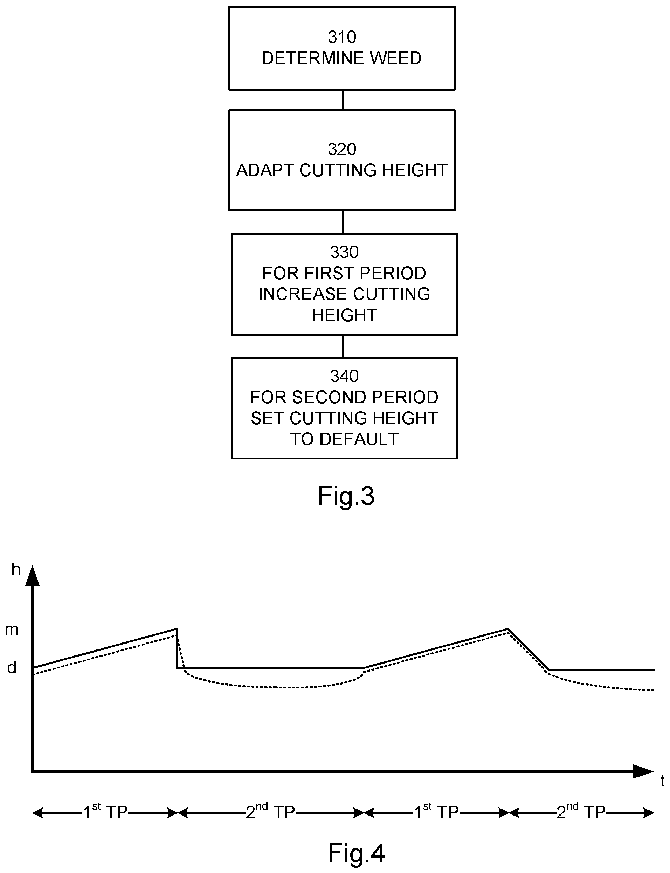

One particular situation will now be discussed with reference to figures 3 and 4, namely when a lawn that includes or contains weeds. In figure 2 the garden is shown as having (a portion of) weed. Through inventive reasoning and research, the inventors have realized that certain weeds adapt to the cutting height of a lawn, and will stop growing past a height under the cutting height, which enables the weed to spread over the lawn, the weed growing sideways.

In order to overcome this, the inventors are proposing a specific operating schedule for lawn types containing weed as will be shown in figure 3 showing a flowchart of a method according to the teachings herein and figure 4, showing an adapted cutting height of a robotic lawnmower according to the teachings herein. The operating schedule is based on an adaptation or change of the cutting height.

The robotic lawnmower 100 is configured to determined 310 that the lawn contains weed. The determination may in some embodiments be based on sensor input, such as image recognition of weeds. The determination may in some embodiments be based on input from the server. The determination may in some embodiments be based on input from the user, the user indicating the presence of weed and/or that a weed suppressing program should be executed. In some embodiments, the robotic lawnmower is configured to also determine (autonomously or through input) the type of weed.

Based on the presence of weed, the operating schedule is adapted or determined to adapt the cutting height 320 and possibly also the cutting time.

In some embodiments the robotic lawnmower determines that the whole lawn comprises weed and adapts the cutting for the whole lawn. In some embodiments the robotic lawnmower determines that a portion of the lawn comprises weed and adapts the cutting for the portion of the lawn.

As the robotic lawnmower 100 operates according to the operating schedule, the robotic lawnmower is configured to operate 330 in a first time period and a second time period.

In the first time period the cutting height will be increased 330 successively from a default cutting height to a maximum cutting height. The maximum cutting height is, in some embodiments, the maximum cutting height of the robotic lawnmower 100. The maximum cutting height is, in some embodiments, a maximum cutting height for weed, and in some such embodiments, a maximum cutting height for an identified type of weed. The maximum cutting height is, in some embodiments, the default cutting height multiplied by 1.5 (for cutting one third of the grass height in the second time period). The maximum grass height (as well as or as an alternative to the minimum grass height) may be set depending on grass type. The increase may be on a daily basis, where the cutting height is increased every day. The increase may be for each operating session, where the cutting height is increased every operating session. The increase may be gradual, continuous or stepwise. In some embodiments, the first time period is 5, 10, 15, 20, 25 or 30 days. In some embodiments, the first time period is 1, 2, 3, or 4 weeks. In some embodiments, the first time period is 1 or 2 months.

In the second time period the cutting height will reduced 340 to the default cutting height. In some embodiments, the second time period is 5, 10, 15, 20, 25 or 30 days. In some embodiments, the second time period is 1, 2, 3, or 4 weeks. In some embodiments, the second time period is 1 or 2 months.

In some embodiments, the first time period and/or the second time period is determined by the robotic lawnmower 100, based on sensor input. The sensor input may relate to the growth of the weed, and the robotic lawnmower is thus enabled to - over time - determine what time periods provide the least growth of weed and adapt the time periods accordingly.

The effect of the adapted cutting height is that the grass will for a (first) time period be allowed to grow taller than usual. This will have two effects. Firstly, the taller grass will have a suffocating or choking effect on the weed. Grass will normally outgrow and compete stronger in growth than weeds. This will stunt the spread of weaker weeds. Secondly, the stronger weeds that can compete with grass in terms of growth will need to grow taller in order to keep up with the height of the grass. When the default cutting height is resumed, the grass and the taller weeds will be chopped. Grass is fine with being cut down as long as less than a third of the straw is cut. Weeds will however take more damage from being cut, which will stunt the spread of stronger weeds. In order to avoid tufts during the growth period (first period), the height should be ramped up progressively over a number of operating sessions.

In some embodiments the robotic lawnmower 100 is configured to return to the default cutting height in the second time period by decreasing the cutting height gradually, continuously or stepwise over a downramping number of operating sessions. This in order to avoid tufts during the down cutting for a robotic lawnmower with random cutting patterns.

In some embodiments, where the robotic lawnmower 100 has systematic cutting patterns (which are understood herein to be cutting patterns where the height of cutting is changed over time) can change to the default height immediately.

Figure 4 illustrates the intended effects on grass and weed growth as per the change in cutting height in the two time periods. In figure 4, the cutting height (h) of the operating schedule is shown over time (t). As can be seen the robotic lawnmower increases the cutting height (shown by the full line) from the default cutting height (d) to the maximum cutting height (m) in the first time period (1^{st} TP). As the cutting height increases the weed will be allowed to grow taller (weed growth shown by the dotted line).

In the second time period (2^{nd} TP) the cutting height is (again) set to the default cutting height.

In some embodiments, the first and second time periods are repeated. In some such embodiments, the first and second time periods are repeated if it is determined that weed is still present.

Another or subsequent first time period (1^{st} TP) is also shown in figure 4, followed by another or subsequent second time period (2^{nd} TP). As can be seen in the subsequent second time period, the robotic lawnmower utilizes a downramping of the cutting height, which also indicates that different cutting patterns may be used in different time periods.

In some embodiments the cutting height (maximum, default, and/or steps of change) is based on the type of weed.

In some embodiments the duration of the first time period is based on the type of weed.

In some embodiments the duration of the second time period is based on the type of weed.

In some embodiments the robotic lawnmower 100 is configured to repeat the first and/or time period a number of times.

In some embodiments the number of times (1 or more) to repeat the first time period is based on the type of weed.

In some embodiments the number of times (1 or more) to repeat the second time period is based on the type of weed.

In some embodiments the type of weed is determined based on sensor input, such as based on image recognition.

In some embodiments the type of weed is determined based on user input.

The teachings herein has the benefit in that it leads to an improved perception of lawn quality while using existing mechanical and hardware solutions. This can be implemented in software and used on most existing and future robotic lawnmower products that are equipped with a motor for adjusting the cutting height.

The determination of weed (and/or weed type) and/or the determination of how to adapt the cutting height, the duration of the first time period and/or the duration of the second time period is in some embodiments performed utilizing a neural network, or other machine learning system, where the system is trained using determined weed types, previously used cutting heights and time periods, and/or the resulting grass status, whereby the system is enabled to identify presence and possibly also type of weed, and be able to propose a fitting cutting schedule resulting in a desired quality of lawn.

In some embodiments, the robotic lawnmower 100 further comprises sensors for detecting environmental factors, such as sun light and/or moisture levels, and adapt the cutting schedule based on such input. In some embodiments, the information on environmental factors are received from the server. In some embodiments, the information on environmental factors are received from the user via user input.

## Claims

1. A robotic lawnmower system (200) comprising a robotic lawnmower (100) configured to operate in a work area comprising a lawn, wherein the robotic lawnmower (100) comprises a camera (180), a grass cutting device (160) arranged to enable adaption of a cutting height, a memory (120) and a controller (110), wherein the controller (110) is configured to read instructions from the memory (120) and execute these instructions to control the operation of the robotic lawnmower 100 thereby configuring the robotic lawnmower (100) to determine that the lawn comprises weeds (310) and what type of weeds and in response thereto adapt the cutting height (320) of the robotic lawnmower (100) by
for a first time period increasing (330) the cutting height from a default cutting height to a maximum cutting height and
for a second time period setting (340) the cutting height to the default cutting height, wherein the robotic lawnmower system (200) is **characterized in that**
determining that the lawn comprises weeds is determined based on sensor input from the camera (180) through image recognition, and **in that**
a type of weed is determined based on the sensor input from the camera (180) through image recognition.

2. The robotic lawnmower system (200) according to claim 1, wherein any, some or all of the maximum cutting height, default cutting height, and/or steps of change of the cutting height is based on the type of weed.

3. The robotic lawnmower system (200) according to any preceding claim, wherein the duration of the first time period is based on the type of weed.

4. The robotic lawnmower system (200) according to any preceding claim, wherein the second time period is based on the type of weed.

5. The robotic lawnmower system (200) according to any preceding claim, wherein the robotic lawnmower (100) is further configured to adapt the cutting schedule based on environmental factors.

6. The robotic lawnmower system (200) according to claim 5, wherein the robotic lawnmower (100) further comprises sensors for detecting such environmental factors.

7. The robotic lawnmower system (200) according to any preceding claim, wherein the robotic lawnmower (100) is further configured to determine that the weed is present in a portion of the lawn and in response thereto adapt the cutting height in that portion.

8. A method for use in a robotic lawnmower system (200) comprising a robotic lawnmower (100) configured to operate in a work area comprising a lawn, the robotic lawnmower comprising a camera (180) and a grass cutting device (160) arranged to enable adaption of a cutting height, the method comprising
determining that the lawn comprises weeds and what type of weeds and in response thereto adapting the cutting height of the robotic lawnmower (100) by
for a first time period increasing the cutting height from a default cutting height to a maximum cutting height and
for a second time period setting the cutting height to the default cutting height, wherein the method is **characterized in that**
determining that the lawn comprises weeds is determined based on sensor input from the camera (180) through image recognition, and **in that**
a type of weed is determined based on the sensor input from the camera (180) through image recognition.

## Patentansprüche

1. Rasenmährobotersystem (200), umfassend einen Rasenmähroboter (100), der konfiguriert ist, um in einem Arbeitsbereich zu arbeiten, umfassend einen Rasen, wobei der Rasenmähroboter (100) eine Kamera (180), eine Grasschneidevorrichtung (160), die angeordnet ist, um eine Anpassung einer Schneidehöhe zu ermöglichen, einen Speicher (120) und eine Steuerung (110) umfasst, wobei die Steuerung (110) konfiguriert ist, um Anweisungen aus dem Speicher (120) zu lesen und diese Anweisungen auszuführen, um den Betrieb des Rasenmähroboters 100 zu steuern, wodurch der Rasenmähroboter (100) konfiguriert ist, um zu bestimmen, dass der Rasen Unkraut (310) umfasst und welche Art des Unkrauts, und als Reaktion darauf die Schneidehöhe (320) des Rasenmähroboters (100) anzupassen durch
für eine erste Zeitspanne, Erhöhen (330) der Schneidehöhe von einer Standardschneidehöhe auf eine maximale Schneidehöhe und
für eine zweite Zeitspanne, Einstellen (340) der Schneidehöhe auf die Standardschneidehöhe, wobei das Rasenmährobotersystem (200) **dadurch gekennzeichnet ist, dass**
das Bestimmen, dass der Rasen Unkraut umfasst, basierend auf Sensoreingaben von der Kamera (180) durch Bilderkennung bestimmt wird, und **dadurch, dass**
eine Art des Unkrauts basierend auf der Sensoreingabe von der Kamera (180) durch Bilderkennung bestimmt wird.

2. Rasenmährobotersystem (200) nach Anspruch 1, wobei eine beliebige, einige oder alle der maximalen Schneidehöhe, der Standardschneidehöhe und/oder der Änderungsschritte der Schneidehöhe auf der Art des Unkrauts basieren.

3. Rasenmährobotersystem (200) nach einem der vorstehenden Ansprüche, wobei die Dauer der ersten Zeitspanne auf der Art des Unkrauts basiert.

4. Rasenmährobotersystem (200) nach einem der vorstehenden Ansprüche, wobei die zweite Zeitspanne auf der Art des Unkrauts basiert.

5. Rasenmährobotersystem (200) nach einem der vorstehenden Ansprüche, wobei der Rasenmähroboter (100) ferner konfiguriert ist, um den Schneideplan basierend auf Umweltfaktoren anzupassen.

6. Rasenmährobotersystem (200) nach Anspruch 5, wobei der Rasenmähroboter (100) ferner Sensoren zum Erfassen solcher Umweltfaktoren umfasst.

7. Rasenmährobotersystem (200) nach einem der vorstehenden Ansprüche, wobei der Rasenmähroboter (100) ferner konfiguriert ist, um zu bestimmen, dass das Unkraut in einem Abschnitt des Rasens vorhanden ist, und als Reaktion darauf die Schneidehöhe in diesem Abschnitt anzupassen.

8. Verfahren zur Verwendung in einem Rasenmährobotersystem (200), umfassend einen Rasenmähroboter (100), der konfiguriert ist, um in einem Arbeitsbereich zu arbeiten, umfassend einen Rasen, der Rasenmähroboter umfassend eine Kamera (180) und eine Grasschneidevorrichtung (160), die angeordnet ist, um eine Anpassung einer Schneidehöhe zu ermöglichen, das Verfahren umfassend
Bestimmen, dass der Rasen Unkraut umfasst und welche Art von Unkraut, und als Reaktion darauf Anpassen der Schneidehöhe des Rasenmähroboters (100) durch
für eine erste Zeitspanne, Erhöhen der Schneidehöhe von einer Standardschneidehöhe auf eine maximale Schneidehöhe und
für eine zweite Zeitspanne, Einstellen der Schneidehöhe auf die Standardschneidehöhe, wobei das Verfahren **dadurch gekennzeichnet ist, dass**
das Bestimmen, dass der Rasen Unkraut umfasst, basierend auf Sensoreingaben von der Kamera (180) durch Bilderkennung bestimmt wird, und **dadurch, dass**
eine Art des Unkrauts basierend auf der Sensoreingabe von der Kamera (180) durch Bilderkennung bestimmt wird.

## Revendications

1. Système de tondeuse à gazon robotique (200) comprenant une tondeuse à gazon robotique (100) conçue pour fonctionner dans un zone de travail comprenant du gazon, dans lequel la tondeuse à gazon robotique (100) comprend une caméra (180), un dispositif de coupe d'herbe (160) agencé pour permettre l'adaptation d'une hauteur de coupe, une mémoire (120) et un organe de commande (110), dans lequel l'organe de commande (110) est configuré pour lire des instructions dans la mémoire (120) et exécuter ces instructions pour commander le fonctionnement de la tondeuse à gazon robotique 100 en configurant de ce fait la tondeuse à gazon robotique (100) pour déterminer que le gazon comprend des mauvaises herbes (310) et déterminer le type de mauvaises herbes et en réponse à cela adapter la hauteur de coupe (320) de la tondeuse à gazon robotique (100) par
pendant un premier laps de temps l'augmentation (330) de la hauteur de coupe d'une hauteur de coupe par défaut à une hauteur de coupe maximale et
pendant un second laps de temps le réglage (340) de la hauteur de coupe à la hauteur de coupe par défaut, dans lequel le système de tondeuse à gazon robotique (200) est **caractérisé en ce que**
la détermination que le gazon comprend des mauvaises herbes est déterminée en fonction d'une entrée de capteur provenant de la caméra (180) par le biais d'une reconnaissance d'image, et **en ce que**
un type de mauvaise herbe est déterminé en fonction de l'entrée de capteur provenant de la caméra (180) par le biais d'une reconnaissance d'image.

2. Système de tondeuse à gazon robotique (200) selon la revendication 1, dans lequel l'une quelconque, certaines ou toutes parmi la hauteur de coupe maximale, la hauteur de coupe par défaut et/ou les étapes de changement de la hauteur de coupe sont en fonction du type de mauvaise herbe.

3. Système de tondeuse à gazon robotique (200) selon l'une quelconque revendication précédente, dans lequel la durée du premier laps de temps est en fonction du type de mauvaise herbe.

4. Système de tondeuse à gazon robotique (200) selon l'une quelconque revendication précédente, dans lequel le second laps de temps est en fonction du type de mauvaise herbe.

5. Système de tondeuse à gazon robotique (200) selon l'une quelconque revendication précédente, dans lequel la tondeuse à gazon robotique (100) est conçue en outre pour adapter le programme de coupe en fonction de facteurs environnementaux.

6. Système de tondeuse à gazon robotique (200) selon la revendication 5, dans lequel la tondeuse à gazon robotique (100) comprend en outre des capteurs permettant de détecter de tels facteurs environnementaux.

7. Système de tondeuse à gazon robotique (200) selon l'une quelconque revendication précédente, dans lequel la tondeuse à gazon robotique (100) est conçue en outre pour déterminer que les mauvaises herbes sont présentes dans une partie du gazon et en réponse à cela adapter la hauteur de coupe dans cette partie.

8. Procédé pour utilisation dans un système de tondeuse à gazon robotique (200) comprenant une tondeuse à gazon robotique (100) conçue pour fonctionner dans une zone de travail comprenant du gazon, la tondeuse à gazon robotique comprenant une caméra (180) et un dispositif de coupe d'herbe (160) agencé pour permettre l'adaptation d'une hauteur de coupe, le procédé comprenant
la détermination que le gazon comprend des mauvaises herbes et la détermination du type de mauvaises herbes et en réponse à cela l'adaptation de la hauteur de coupe de la tondeuse à gazon robotique (100) par
pendant un premier laps de temps l'augmentation de la hauteur de coupe d'une hauteur de coupe par défaut à une hauteur de coupe maximale et
pendant un second laps de temps le réglage de la hauteur de coupe à la hauteur de coupe par défaut, dans lequel le procédé est **caractérisé en ce que**
la détermination que le gazon comprend des mauvaises herbes est déterminée en fonction d'une entrée de capteur provenant de la caméra (180) par le biais d'une reconnaissance d'image, et **en ce que**
un type de mauvaise herbe est déterminé en fonction de l'entrée de capteur provenant de la caméra (180) par le biais d'une reconnaissance d'image.
